Europäisches Patentamt

European Patent Office

Office européen des brevets

(11) Veröffentlichungsnummer: **0 249 644**
B1

# (12) EUROPÄISCHE PATENTSCHRIFT

(45) Veröffentlichungstag der Patentschrift:
05.09.90

(51) Int. Cl.⁵: **H04N 11/00**, H04N 5/208

(21) Anmeldenummer: 86108170.1

(22) Anmeldetag: 14.06.86

(54) Verfahren zum Übertragen von Fernsehsignalen mit verbesserter Bildqualität.

(43) Veröffentlichungstag der Anmeldung:
23.12.87 Patentblatt 87/52

(45) Bekanntmachung des Hinweises auf die Patenterteilung:
05.09.90 Patentblatt 90/36

(84) Benannte Vertragsstaaten:
DE FR GB NL

(56) Entgegenhaltungen:
WO-A-83/02704

IEEE TRANSACTIONS ON CONSUMER ELECTRONICS,
Band CE-31, Nr. 4, November 1985, Seiten 642-653, IEEE,
New York, US; Y. NAKAJIMA et al.: "Improvement of
picture quality for NTSC and PAL systems by digital
signal processing"
WISSENSCHAFTLICHE BERICHTE A.E.G.
TELEFUNKEN, Band 45, Nr. 1/2, 1972, Seiten 36-47,
Berlin, DE; P. ZAMPERONI: "Die Verbesserung der
Bildqualität bei tiefpassbegrenzten Fernsehsignalen"

(73) Patentinhaber: ANT Nachrichtentechnik GmbH,
Gerberstrasse 33, D-7150 Backnang(DE)

(72) Erfinder: Wendland, Broder, Prof. Dr.-Ing., Am
Stadtgarten 58, D-4355 Waltrop(DE)
Erfinder: Schröder, Hartmut, Dr.-Ing., Weisse Taube 30,
D-4600 Dortmund 50(DE)
Erfinder: Eisler, Hertwig, Dipl.-Ing., Alte Strasse 25,
D-4600 Dortmund 1(DE)
Erfinder: Becker, Peter, Dipl.-Ing., Am Haderner
Winkel 7, D-8027 Neuried(DE)

## Beschreibung

Die Erfindung betrifft ein Verfahren gemäß dem Oberbegriff des Patentanspruchs 1. Ein solches Verfahren ist bekannt aus EP 57 826 A2.

Beim Verfahren gemäß EP 57 826 A2 ist eine fehlerfreie Bildabtastung und eine zeilenfreie Rekonstruktion bei Übertragung über einen genormten Übertragungskanal mit erhöhter Detailauslösung möglich. Das Fernsehsignal wird sendeseitig zeilenweise mit doppelter Normzeilenzahl abgetastet, vertikal bzw. planar vorgefiltert und einer Abtastwandlung zur Erzeugung eines Zeilensprungsignals unterzogen. Nach der Übertragung über einen bandbegrenzten Standardkanal erfolgt eine entsprechende Abtastrückwandlung und eine Nachfilterung zur Rekonstruktion und Interpolation der bei der Vorfilterung auf der Sendeseite unterdrückten Information. Die Wiedergabe erfolgt mittels eines Empfangsmonitors mit erhöhter Zeilenzahl.

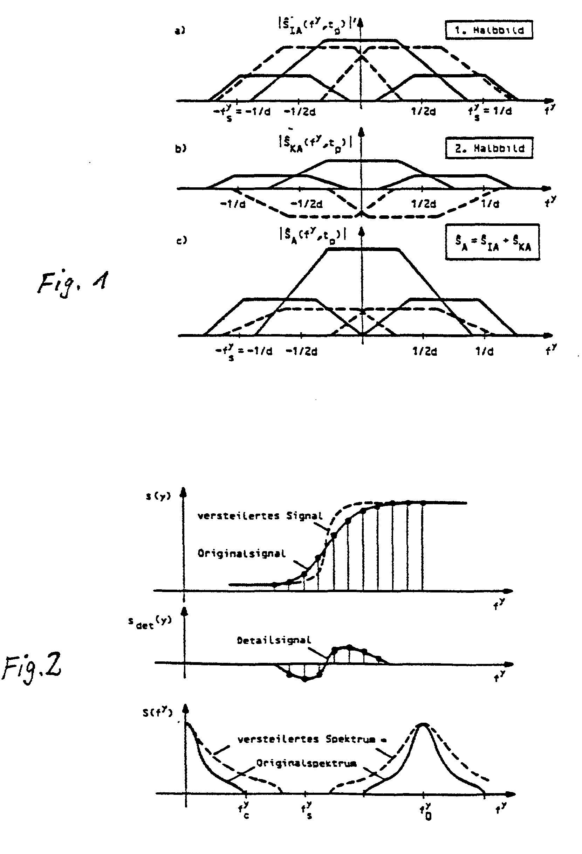

Herkömmliche Verfahren zur Kantenversteilerung sind bei Fernsehsignalen nur stark eingeschränkt anwendbar. Wegen der starken spektralen Überlappung der Fernsehsignalspektren führt eine nichtlineare vertikale Kantenversteilerung stets zur Verstärkung eben dieser spektralen Überlappungen. Fig. 1 verdeutlicht diese Überlappung der Spektren bei Zeilensprung nach vertikaler (in Richtung vertikaler Ortsfrequenzen $f_y$) nichtlinearer Kantenversteilerung.

Die jeweils im Halbbild in den Kanten versteilerten Signale mit den zugehörigen synthetischen Spektren sind in hohem Maße ungleich. Es treten in jedem Halbbild mit von Halbbild zu Halbbild wechselnden Vorzeichen Halbbildaliasspektren (gestrichelt) auf.

Diese sollten vom Auge integriert, d.h. wechselseitig kompensiert werden. Zu einem Zeitpunkt $t_p$ sind aber die Halbbilder unterschiedlich lange abgeklungen, sie werden vom Auge nur unzureichend kompensiert. Dieser Kompensationsprozeß ist bei nichtlinearer Kantenversteilerung (d.h. spektrale Ausdehnung) ersichtlich weiter erschwert. Das bedeutet, daß die 25 Hz Flackerstörungen an Kanten und hochfrequenten Details verstärkt auftreten.

Aus der Veröffentlichung "C. Rint, Handbuch für Hochfrequenz- und Elektro-Techniker, Bd. 3, 1979, Seiten 643 bis 645" ist es bekannt, zur Verminderung der Pulsanstiegszeit (Kantenversteilerung) eines Schwarzweißsprungs durch zweimaliges Differenzieren des Eingangssignals ein Korrektursignal zu gewinnen, das zum Eingangssignal mit negativem Vorzeichen addiert wird. Auch kann bei dieser Veröffentlichung eine Signalabtastung erfolgen.

Aus Wissenschaftliche Berichte AEG Telefunken, Band 45, Nr. 1/2, 1972, Seiten 36–47, Berlin, DE; P. Zamperoni: "Die Verbesserung der Bildqualität bei tiefpaßbegrenzten Fernsehsignalen" ist es bekannt, ein synthetisches Korrektursignal zur Flankenversteilerung aus den zeitlichen Ableitungen des Videosignals zu erzeugen und dieses synthetische Korrektursignal dem Videosignal linear oder quadratisch zuzusetzen, um ein korrigiertes Videosignal zu erzeugen. Die Flankenversteilerung erfolgt dort durch eine spektrale Extrapolation, d.h. eine Gewinnung eines verbesserten Signals durch Fortführung des spektralen Verlaufs über die Bandgrenze des Videosignals hinaus.

Aufgabe der Erfindung ist es, das Verfahren gemäß dem Oberbegriff des Patentanspruchs 1 so auszubilden, daß nichtlineare Kantenversteilerungen möglich sind, ohne unzulässige Überlappungen der Fernsehsignalspektren hervorzurufen. Diese Aufgabe wird durch die kennzeichnenden Merkmale des Patentanspruchs 1 gelöst. Die Unteransprüche zeigen vorteilhafte Weiterbildungen auf.

Die Erfindung beruht auf folgender Erkenntnis: In Verbindung mit einer geeigneten Vorfilterung (vertikal oder zweidimensional - planar - in diagonalen oder in horizontaler/vertikaler Richtung/en) auf der Sendeseite und entsprechender Nachfilterung auf der Empfangsseite werden spektrale Lücken erzeugt, die ohne Gefahr der Überlappung zur nichtlinearen Kantenversteilerung genutzt werden können. Mit diesem Ansatz ist eine grundsätzlich neue Technik der Kantenversteilerung möglich. Dabei sind prinzipiell zwei Möglichkeiten zur Kantenversteilerung realisierbar, nämlich
- die Addition von Detailsignalen,
- der Ersatz der Originalkante durch eine synthetische Kante.

Anhand der Zeichnungen wird das Verfahren gemäß der Erfindung nun näher erläutert. Es zeigen

Fig. 2 die nichtlineare vertikale Kantenversteilerung durch Detailsignaladdition für hochzeilig interpolierte Fernsehsignale,

Fig. 3 Fourierspektren für aliasfreie Abtastung und "flatfield"-Reproduktion (Kellfaktor→1)
a) periodische Spektralbereiche bei zeilenweiser Abtastung,
b), c) periodische Spektralbereiche nach Filterung und Down-Sampling (Zeilenkonversion),
d) periodische Spektralbereiche mit Lücken nach Up-Sampling, Filterung mit Monitorübertragungsfunktion,

Fig. 4 ein Beispiel für eine vertikale kantenversteilernde Detailsignaladdition (Blockschaltbild),

Fig. 5 die Kantenversteilerung durch Detailsignalbildung:
1. Ableitung • 2. Ableitung
a) Detailsignalbildung durch ideale Ableitungen,
b) Detailsignalbildung durch Differenzen längs einer Kante,

Fig. 6 die Kantenversteilerung durch synthetische Korrektursignale (Blockschaltbild),

Fig. 7 ein Modell zur Bildung des synthetischen Korrektursignals,

Fig. 8 ein vorkorrigiertes synthetisches Kantensignal,

Fig. 9 Spektren am Sender und Empfänger,

Fig. 10 die horizontale und vertikale Kantenversteilerung mit orthogonaler Vorfilterung zur Kantendetektion,

Fig. 11 die diagonale Vor- und Nachfilterung,

Fig. 12 die Auflösungsgrenzen für vertikale (V) und diagonale (D) Vor-und Nachfilterung,

Fig. 13 die diagonale Kantenversteilerung und

Fig. 14 die diagonale Kantenversteilerung mit horizontaler und vertikaler Vorfilterung zur Kantendetektion.

Beim Verfahren "Addition von Detailsignalen" wird beispielsweise aus dem Originalsignal durch nichtlineare Verarbeitung an einer Kante ein Detailsignal erzeugt. Dieses Detailsignal wird an Kanten signalabhängig zum vorgefilterten Fernsehsignal addiert (Fig. 2). Es entsteht das versteilerte Signal.

In Fig. 2 ist jeweils die Spektralfunktion S(y) in Abhängigkeit der vertikalen Ortsfrequenz fy dargestellt. $f_s y$ bezeichnet die Abtastfrequenz in vertikaler Richtung und $f_c y$ die Grenzfrequenz in vertikaler Richtung. Im Fourierbereich entspricht die Versteilerung im Bereich der Kante einer spektralen Erweiterung, die für ein hochzeilig interpoliertes Signal die Lücken teilweise wieder füllt, was bei vertikaler Verarbeitung sehr kontrolliert erfolgen muß. Das Verfahren baut auf dem Konzept der EP 57 826 A2 zur fehlerfreien Bildabtastung und Bildwiedergabe mit Vor- und Nachfilterung auf. Es wird eine hochzeilige Bildaufnahme, beispielsweise mit 1250 Zeilen, vorgenommen und in Verbindung mit einer vertikalen bzw. planaren Vorfilterung eine Abtast-Umwandlung (Scan-Conversion) auf Normzeilenzahl, beispielsweise 625 Zeilen, durchgeführt. Hierdurch entsteht ein überlappfreies, d.h. aliasfreies Signalspektrum. Die Übertragung kann kompatibel mit Standardzeilenzahl erfolgen. Im Empfänger wird eine "Scan-Conversion" von 625 auf 1250 Zeilen in Verbindung mit einer entsprechenden Interpolations- und Nach filterung vorgenommen. Der hochzeilige Empfänger reproduziert dann ein alias- und zeilenfreies Bild, das im Vollbild- oder Zeilensprungmode wiedergegeben werden kann.

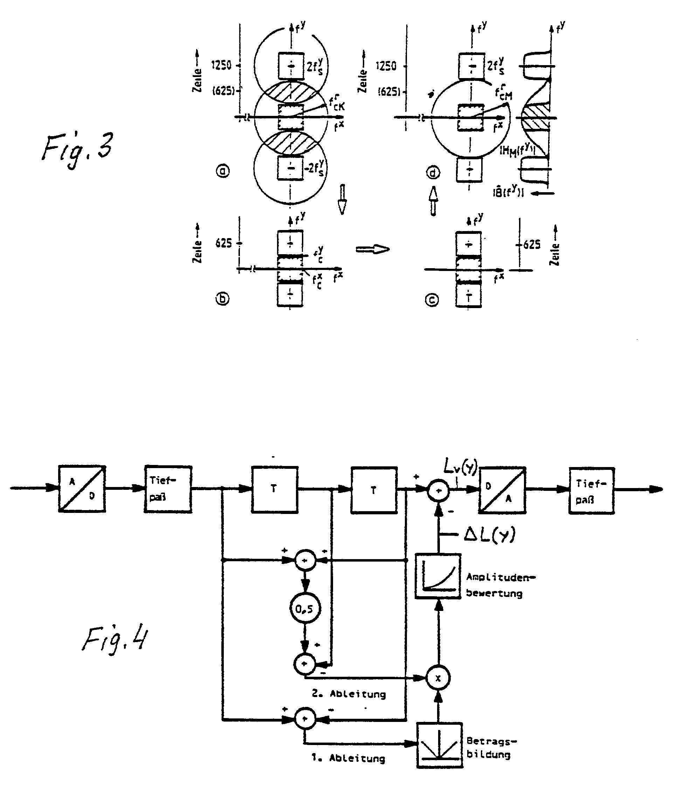

Bei diesem Konzept wird durch hochzeilige Bildaufnahme eine hinreichend große aliasfreie Zone geschaffen (Fig. 3a). Es erfolgt dann eine anschließende Abwärtskonversion auf Normalzeilenzahl nach vorheriger Filterung und damit eine fehlerfreie normalzeilige Übertragung. Der Empfänger führt dann (Fig. 3d) eine Aufwärtskonversion aus, d.h. eine Interpolationsfilterung, so daß zwischen den Spektren Lücken entstehen. Diese Lücken ermöglichen eine zeilenfreie, d.h. fehlerfreie Bildwiedergabe. Dies ist besonders wichtig z.B. bei Test- und Grafikwiedergabe.

Bei einem so vor- und nachgefilterten Signal entsteht durch die fehlende Zeilenstruktur subjektiv der Eindruck der Unschärfe. Das Bild erscheint teilweise "flau", insbesondere in schwach strukturierten Bereichen. Hier ist es nun möglich, mit nichtlinearen Methoden eine Erweiterung desSpektralgehaltes bis in die spektralen Lücken vorzunehmen, ohne Aliasfehler zu verstärken. Das bedeutet, daß eine nichtlineare vertikale Kantenversteilerung vorgenommen werden kann, die weit ausgeprägter sein darf als bei herkömmlichen Fernsehsystemen.

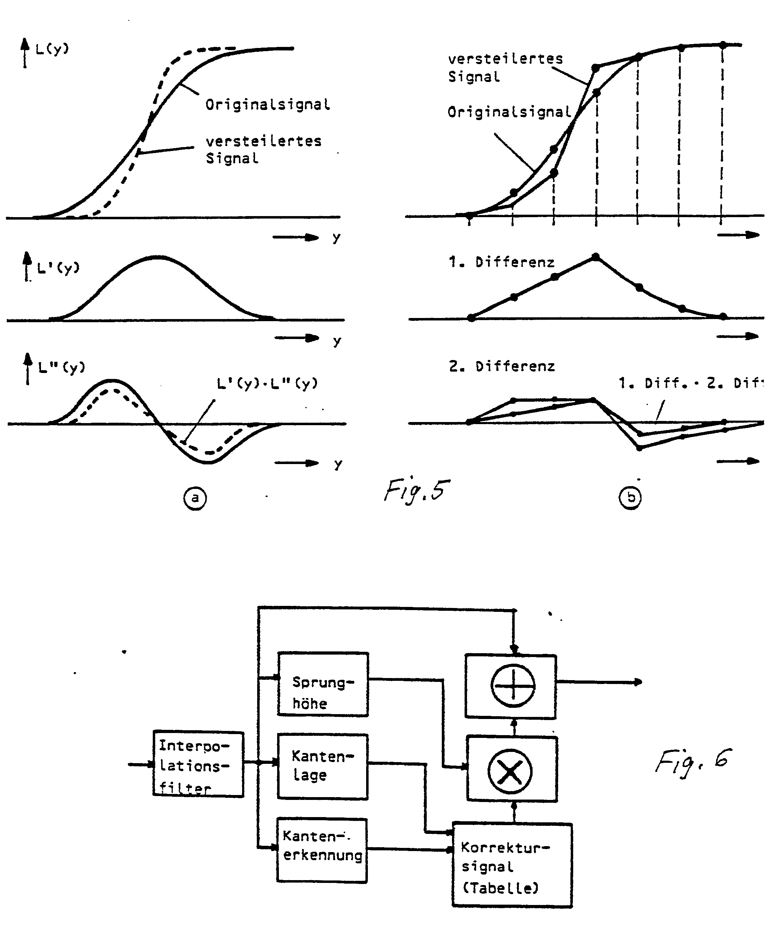

Nachfolgend wird ein Ausführungsbeispiel zum Durchführen des Verfahrens "Addition von Detailsignalen" vorgestellt. Das Blockschaltbild dieses Beispiels zeigt Fig. 4 Das Korrektursignal, das dem ursprünglichen vorgefilterten Bildsignal hinzuaddiert wird, wird hierbei durch Differenzbildung an einer Kante erzeugt. Das Eingangssignal wird analog/digital gewandelt und tiefpaßgefiltert. Anschließend werden mittels der beiden T-Glieder, die jeweils eine Zeilenver zögerung bewirken, drei Additionsstufen sowie einer Amplitudenbewertungsstufe mit dem Bewertungsfaktor 0,5 Differenzen gebildet, die näherungsweise die erste und zweite Ableitung des Bildsignals erzeugen. Nach der Betragsbildung der ersten Ableitung werden erste und zweite Ableitung miteinander multipliziert. Das so erzeugte Korrektursignal wird nach einer nichtlinearen Amplitudenbewertung an der Kante zum ursprünglichen Signal addiert. Anschließend erfolgt eine digital/analoge Rückwandlung und eine Tiefpaßfilterung.

Fig. 5a zeigt die Funktionsweise des angegebenen Verfahrens für kontinuierliche Signale, Fig. 4b zeigt die zugehörigen Näherungen, die durch das Abtastraster bedingt sind. Aus dem Originalsignal L(y) werden die 1. und 2. Ableitung bzw. die 1. und 2. Differenz gebildet. Durch Multiplikation entsteht ein Korrektursignal, das dem Originalsignal (mit invertiertem Vorzeichen) zugefügt wird.

Für das Korrektursignal ΔL(y) und das versteilerte Signal $L_v(y)$ ergibt sich mit k als nichtlinearer Amplitudenbewertung:

$$\Delta L(y) = k \cdot |L'(y)| \cdot L''(y) \quad (1)$$
$$L_v(y) = L(y) - \Delta L(y) \quad (2)$$

Es ist mit diesem Verfahren eine erhebliche Verringerung der Anstiegszeit zu erreichen, die auch in einer deutlichen Verbesserung des subjektiven Bildeindrucks insbesondere der Bildschärfe zum Ausdruck kommt.

Ersichtlich ist jedoch das Detailsignal ΔL(y) quadratisch abhängig von der Amplitude der Sprunghöhe. Das bedeutet, daß mit einer großen Sprungamplitude auch eine starke Anhebung erfolgt. Dies kann zum Auftreten von Konturenbildung führen - obwohl bei kleineren Sprüngen noch eine Versteilerung wünschenswert wäre. Ebenfalls treten bei zu starker Korrektur und Zeilensprungwiedergabe Flackererscheinungen auf - besonders an großen Amplitudensprüngen, die wie beschrieben besonders stark korrigiert werden.

Wichtig ist in diesem Zusammenhang noch eine Betrachtung des Rauschverhaltens. Betrachtet man Gl. (1,2), so erhält man für das versteilerte Signalspektrum (* Faltungsoperator)

$$L_v(fy) = L(fy) - k \cdot |L'(fy)| * L''*fy)$$
$$= L(fy) + k \cdot | j\omega \cdot L(fy)| *\{\omega^2 L(fy)\} \quad (3)$$

Ersichtlich gehen in das Detailsignal die Rauschanteile des Originalsignales unmittelbar ein. Es ergibt sich zudem eine spektrale Bewertung mit einer höheren Potenz der Signalfrequenz, so daß insbesondere bei quadratisch ansteigendem (Kamera-) Rauschleistungsdichtespektrum doch eine deutliche Rauschverstärkung zu erwarten ist. Zwar sinkt die Rauschempfindlichkeit des visuellen Systems mit steigender Ortsfrequenz, zusätzlich maskiert eine Kante in gewissem Umfang Rauschstörungen, es ist aber ein prinzipieller Nachteil der klassischen Detailsignaladdition, daß in gewissem Umfang eine Addition von korreliertem Rauschen stattfindet.

Zu dem zuvor beschriebenen Verfahren der Detailsignaladdition besteht die Alternative eines Austausches der Originalkante durch eine synthetische Kante. Dieses Vorgehen bietet den Vorteil einer einfach kontrollierbaren spektralen Erweiterung. Es erfordert allerdings die Extraktion aller Signalparameter, die für die Kante bestimmend sind, also: Lage der Kante, Steigung, Amplitude und mittlere Helligkeit.

Dabei sind unterschiedliche Techniken möglich: Eine Technik besteht darin, als Signalformparameter des Eingangssignals Anfangsamplitudenwert, Endamplitudenwert und Ort des Kantenmittelpunktes feststellen. Daraus wird das synthetische Sprungsignal errechnet und bei der Wiedergabe des Sprungsignals auf das synthetische Signal umgeschaltet.

Vorteil dieser Technik ist es, daß eine exakte Anpassung des Sprungverlaufes an den für das gegebene Wiedergabesystem optimalen Verlauf möglich ist. Nachteil ist jedoch die Gefahr, aufgrund von Meß- und Rechenfehlern einen Umschaltsprung zwischen dem gegebenen Bildsignalverlauf und dem synthetischen Signal zu erzeugen, wenn deren Randwerte nicht identisch sind.

Aufgrund dieser Überlegungen wird deshalb nachfolgend ein Verfahren vorgestellt, das die Vorteile der Detailsignaladdition
- natürlicher Bildeindruck,
- keine Umschaltsprünge,
- einfache Realisierbarkeit,
verknüpft mit den Vorteilen der synthetischen Kantensignalerzeugung:
- keine direkte Rauschanhebung,
- direkt bestimmbare spektrale Erweiterung,
- exakte Anpassung des Sprungverlaufes an das Wiedergabesystem.

Anstatt zwischen dem Eingangssignal und einem vollständig synthetischen Signal umzuschalten, wird das versteilte Signal erfindungsgemäß durch Addition eines synthetischen Korrektursignals erzeugt. Dabei wird mit der Addition dieses Korrektursignals ein idealer Sprungverlauf angenähert. Damit können die Vorteile beider Verfahren im wesentlichen realisiert werden.

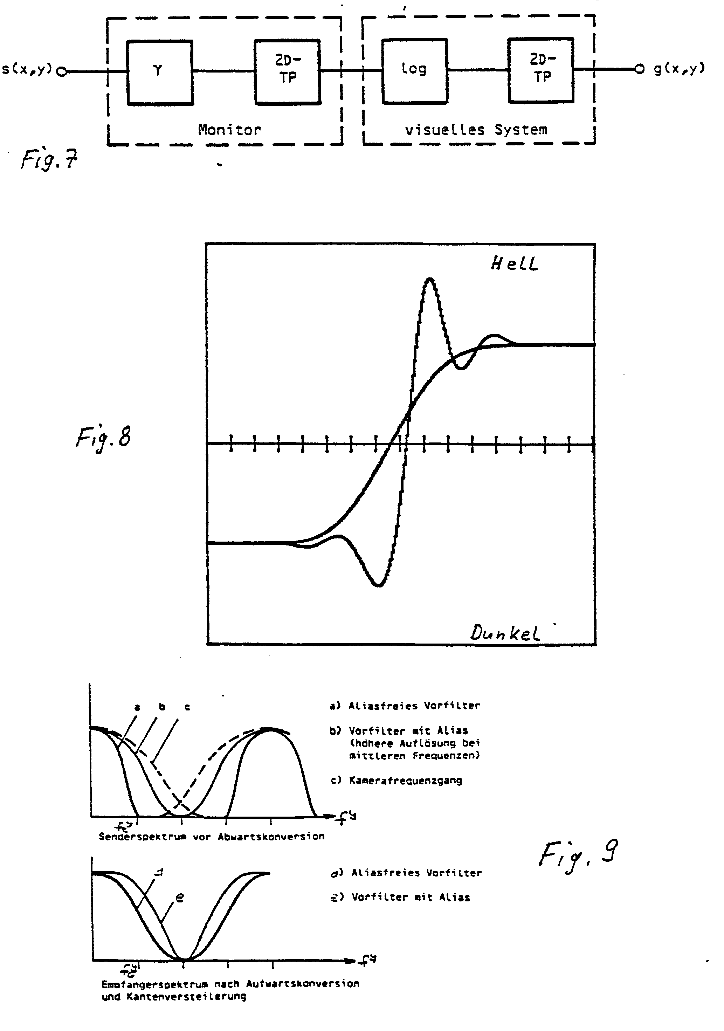

Zur Kantenversteilerung durch synthetische Korrektursignale eignet sich vorzugsweise die Anordnung gemäß Fig. 6. Bei diesem Verfahren werden Kantenlage und Sprunghöhe der Kante berechnet, und es wird aus dem (durch die Filterflanke der Interpolationsfilterung festgelegten) Sprungverlauf durch Addition eines synthetischen Korrektursignals eine synthetische Sprungflanke erzeugt (vgl. Fig. 6).

Die Signalparameter werden aus den Ableitungen (bzw. Differenzenquotienten) des Signals berechnet und steuern einen Speicher an, in dem das normierte synthetische Korrektursignal in Tabellenform verfügbar ist (RAM). Dieses Korrektursignal, das in seinem Verlauf den Parametern des Widergabesystems und des visuellen Systems angepaßt ist, wird mit der aus der Sprunghöhe abgeleiteten Detailsignalamplitude a mulipliziert und zum ursprünglichen Signal hinzuaddiert.

Die Detailsignalamplitude a kann aus der Sprunghöhe h der Kante abgeleitet werden durch eine geeignete nichtlineare Funktion. Beispielsweise hat sich folgender nichtlinearer Zusammenhang als besonders vorteilhaft erwiesen:

$$a = O \quad -h_S < h < h_S \quad (1)$$
$$a = k(h-h_S) \quad h \gtrsim h_S \quad (2)$$
$$a = k(h+h_S) \quad h \lesssim -h_S \quad (3)$$

Hierbei wird in einem Bereich kleiner Sprungamplituden $-h_S < h < h_S$ keine Versteilerung vorgenommen. Auf diese Weise kann vermieden werden, daß schwach ausgebildete Kanten unnatürlich angeschärft werden. Ebenfalls kann vermieden werden, daß weiche Kanten unnatürlich versteilert werden, da die gemessene Sprunghöhe bezogen auf das Abtastraster auch bei weichen Kanten unterhalb der Schwelle $h_S$ bleibt. Schließlich wird durch diese Schwellbildung eine Anschärfung von häufigen kleineren Rauschstörungen ausgeschlossen. An diesem Bereich (1) mit a = O schließt sich der Proportionalbereich (2), (3) an, der weich einsetzend für eine natürliche Amplitudenbewertung sorgt und bei Entscheidungsunsicherheiten "busy edges" verhindert.

Es sind hierbei durch den bekannten Verlauf der Sprungflanke definierte Aussagen über die maximale spektrale Erweiterung des Signals möglich. Es können unmittelbar Angaben über die resultierende Belegung der spektralen Lücken gemacht werden, was insbesondere bei Zeilensprungdarstellung von Bedeutung ist.

Für die Ermittlung der Korrektursignale wird dabei das in Fig. 7 dargestellte Modell zugrunde gelegt. Die nichtlineare γ-Kennlinie und eine zweidimensionale Tiefpaßfilterung (Monitorspot) beschreiben die Wirkung des Monitors. Die logarithmische Rezeptorkennlinie und ein zweidimensionaler Tiefpaß ersetzen näherungsweise die Wirkung des visuellen Systems.

Aus diesem Modell kann näherungsweise ein vorkorrigiertes Kantensignal s(x,y) errechnet werden für ein optimales Kantensignal g(x,y) am Ausgang des Modells. Ein möglicher Ansatz ist dabei beispielsweise die Annahme einer linearen Optimierung des vorkorrigierten Kantensignals in Verbindung mit dem Übertragungssystem. Daraus ergibt sich das synthetische Korrektursignal durch Differenzbildung mit der durch das Übertragungssystem vorgegebenen maximal steilen Kantenflanke.

Für die Ermittlung der Korrektursignale ergeben sich hieraus folgende Konsequenzen:
- Die Gamma-Vorkorrektur in der Kamera für die nichtlineare γ-Kennlinie des Monitors ist durch die zweidimensionale Tiefpaßfilterung nur noch eingeschränkt wirksam. Es werden die Oberwellen der Vorkorrektur besonders bei hochfrequenten Signalen (Kanten) nicht oder geschwächt übertragen.
- Die durch die γ-Kennlinie des Monitors und die logarithmische Kennlinie der Rezeptoren im Auge dann hervorgerufene Unsymmetrie der Überschwinger und der Position einer Kante kann vorteilhaft vorkorrigiert werden.

- Die synthetische Kante kann zusätzlich die Tiefpaßeigenschaft von Monitor und Auge vorentzerren im Sinne einer "Aperturkorrektur".

Fig. 8 zeigt ein entsprechend vorkorrigiertes Kantensignal und die sich durch die gewählte Interpolationsfilterung ergebende Kante (Teilung der Abszisse in "Fernsehzeilen"). Das stärkere Überschwingen zu Weiß hin ergibt sich durch die Ausnutzung der größeren Empfindlichkeit des visuellen Systems in Bereichen geringer Helligkeit. Diese Eigenschaft ergibt sich aus der logarithmischen Kennlinie der Rezeptoren bzw. dem Weber-Fechner'schen Gesetz.

Ersichtlich ist die Steilheit der synthetischen Kante um einen wählbaren Faktor größer. Ebenfalls ist bei der Vorkorrektur die Positionsveränderung der Kanten berücksichtigt. Das im RAM verfügbare Detailsignal wird errechnet aus der Differenz der gewünschten vorkorrigierten synthetischen Kante mit dem sich aus der Bandbegrenzung ergebenden originalen Kantensignal (Fig. 8).

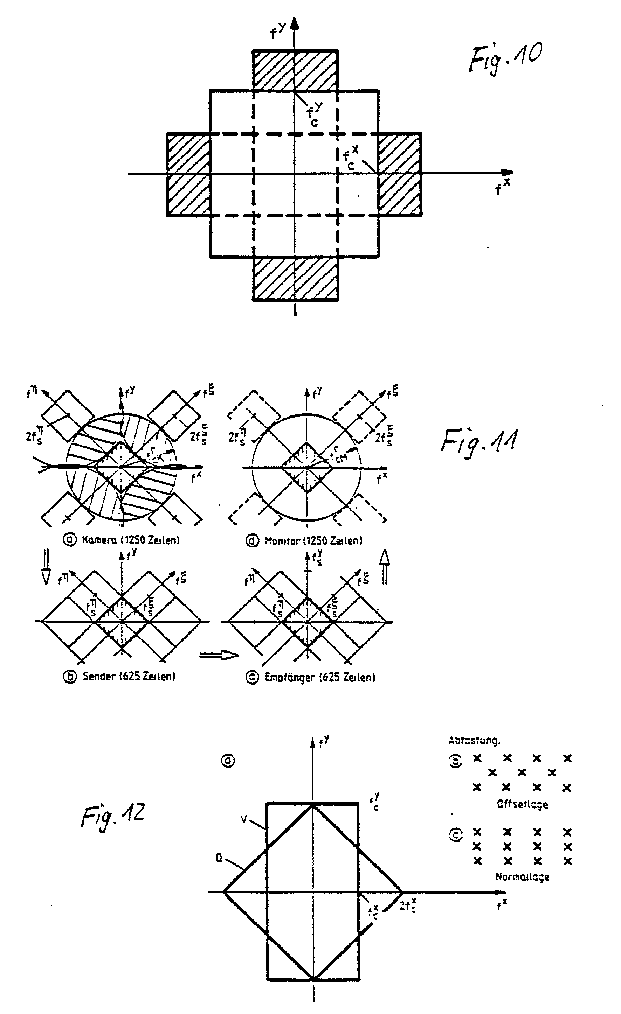

Durch die Vorfilterung am Sender wurde zunächst ein in vertikaler Richtung aliasfreies Bild erzeugt, so daß am Empfänger nur der halbe zur Verfügung stehende spektrale Raum belegt ist (Bild 9a). Diese Vorfilterung korrespondiert mit dem weichen überschwingfreien Kantensignal in Fig. 8. Läßt man am Sender bereits in höherem Maße Aliasstörungen zu (Fig. 9b) wird die Auflösungsreduktion geringer, da vom Kamerafrequenzgang (Fig. 9c) Auflösungsreserven gegeben sind. Eine Kantenversteilerung führt normalerweise zu einem lokalen (Kanten-) Frequenzgang nach Fig. 9d bzw. im Falle des breitbandigeren Vorfilters nach Fig. 9e.

Versuche mit einem solchen breitbandigeren Frequenzgang ergaben, daß das gefilterte und nichtlinear entzerrte Bild eine sehr hohe Auflösung verglichen mit dem schmalbandigen Filterfrequenzgang aufweist. In der Kantenschärfe ist es gegenüber einem hochzeilig übertragenen Bild praktisch gleichwertig.

Es konnte erfolgreich gezeigt werden, daß eine vertikale Kantenversteilerung in Verbindung mit einer Vor- und Nachfilterung erhebliche Bildqualitätsverbesserungen ermöglicht. Im einzelnen konnte gezeigt werden:

(1) Die Bildqualität der vertikalen Vor- und Nachfilterung kann durch eine nichtlineare Kantenversteilerung um ca. 1 Grad auf der CCIR Vergleichsskale verbessert werden. Dies zeigen subjektive Tests.

(2) Mit einer Kantenversteilerung auf der Basis eines synthetischen "idealen" Kantenverlaufes kann eine Einbeziehung der linearen und nichtlinearen Eigenschaften von Monitor und visuellem System (Weber-Fechner'sche Gesetz) vorgenommen werden. Hierdurch ergibt sich mit der prinzipiell wählbaren Versteilerung der Kantenflanke eine optimale Anpassung der nichtlinearen Versteilerung an das Widergabesystem und das visuelle System.

(3) Bei Zeilensprungwiedergabe im Hochzeilenmodus kann eine Ausfüllung der spektralen Lücken zu etwa 80 % vorgenommen werden ohne störendes Flackern bei natürlichen Bildern. In Verbindung mit einer senderseitigen Kompromißfilterung, die Aliasfehler zuläßt und eine Modulationstiefe von etwa 30 - 40 % an der Grenzfrequenz (vertikale Ortsgrenzfrequenz = halbe Zeilenzahl) aufweist, ist eine erhebliche Erhöhung der Modulationstiefe bei mittleren Frequenzen gegeben. Der Betrachter nimmt subjektiv eine höhere Auflösung wahr.

Die Bildqualität ist dann sehr dicht an der eines wirklichen Hochzeilensystem mit doppelter Zeilenzahl:
- Bildschärfe und Kantenflackern sind durch die gewählte Anhebung in der Größe vergleichbar wie bei einem Hochzeilensystem
- Moiré-Störungen an periodischen Strukturen treten bei geeigneter Kantenerkennung des niedrigzeiligen Systems dort nicht auf, sind dagegen im Hochzeilensystem gegeben,
- die Auflösung in Texturbereichen ist allerdings beim Hochzeilensystem nach wie vor verdoppelt.

(4) Eine große Robustheit gegenüber Rauschen ist gegeben. Um flatternde Kanten (busy edges) bei rauschgestörten Bildern zu vermeiden, wurde eine "soft decision" realisiert.

Im folgenden werden Verfahren zu einer zweidimensionalen Kantenversteilerung - im Gegensatz zu den bisher behandelten Verfahren zur vertikalen Kantenversteilerung - bei geeigneter Vor- und Nachfilterung vorgestellt.

Auch unter der Randbedingung einer zweidimensionalen Vor- und Nachfilterung ergeben sich grundsätzlich neue verbesserte Möglichkeiten einer nichtlinearen Kantenversteilerung. Es sei hierzu ein Fernsehsignalspektrum betrachtet, das eine quadratische Auflösungsgrenze $f_c{}^y$, $f_c{}^x$ nach Fig. 10 aufweist. Ein solches Spektrum entsteht beispielsweise in Verbindung mit einer Vor- und Nachfilterung und einer Bandbegrenzung entsprechend der Schachbrettfrequenz. Es lassen sich nun jeweils durch horizontale bzw. vertikale Filterung die beiden gestrichelt eingetragenen Bänder erzeugen. Bei der Kantenversteilerung in horizontaler (vertikaler) Richtung wird nun zur Kantendetektion jeweils das in vertikaler (horizontaler) Richtung begrenzte Band verwendet. Das Spektrum wird dadurch in horizontaler und vertikaler Richtung spektral erweitert (schraffierte Flächen).

In verschiedener Hinsicht ist eine solche Signalverarbeitung besonders vorteilhaft:

(1) Die zur Kantendetektion vorgenommene Vorfilterung in der jeweils orthogonalen Richtung reduziert die Rauschempfindlichkeit, da Rauschkomponenten aus der jeweils gerade nicht versteilerten Richtung abgetrennt werden und zur Störung der Kantenerkennung nicht beitragen können.

(2) Die in natürlichen Bildern besonders häufigen horizontalen und vertikalen Strukturen werden versteilert und damit die Bildschärfe in diesen Richtungen erhöht.

(3) In horizontaler und vertikaler Richtung ist das visuelle System besonders empfindlich bei der Erkennung von Kanten und Linien (oblique effect).

Wie beispielsweise in EP 57 826 A2 ausführlich beschrieben, kann in Verbindung mit einer sogenannten Offsetabtastung eine diagonale Vor- und Nachfilterung erreicht werden. Diese führt ähnlich wie bei der vertikalen Filterung zu einer Abtastung ohne Alias-Komponenten. Das Grundkonzept sei anhand von Fig. 11 beschrieben.

Das Basisbandspektrum einer Hochzeilenkamera sei auf den Bereich $f^r \leqq f_{cK}{}^r$ beschränkt (Fig. 11a). Es läßt sich zeigen, daß sich bei einer Abtastung mit einem zeilenweise um ein halbes Abtastintervall versetzten Punktraster das Basisspektrum in diagonaler Richtung in der gezeichneten Weise wiederholt. Mit einer geeigneten diagonalen Vorfilterung läßt sich das Spektrum nun auf den eingesäumten Rechteckbereich im Grundbereich reduzieren und mit der halben Zeilenzahl und der halben Zahl der Abtastwerte je Zeile auf das "dichtgepackte" periodische Spektrum nach Fig. 11b konzentrieren.

Nach der Übertragung der Abtastwerte im 625-Zeilen-Format über den Übertragungskanal werden die periodischen Spektren von Fig. 11c durch interpolierende Nachfilterung in $f^x$- und $f^y$-Richtung wieder auseinander gezogen. Mit der Modulationsübertragungsfunktion des Monitors mit der Sperrfrequenz $f_{cM}{}^r$ filtert der Monitor das eingesäumte Basisspektrum in Fig. 11d wieder heraus und stellt den entsprechenden Bildinhalt zeilenfrei ohne Auflösungsverlust dar.

Diese diagonale Vor- und Nachfilterung weist gegenüber der vertikalen Vor- und Nachfilterung folgende Besonderheiten auf:

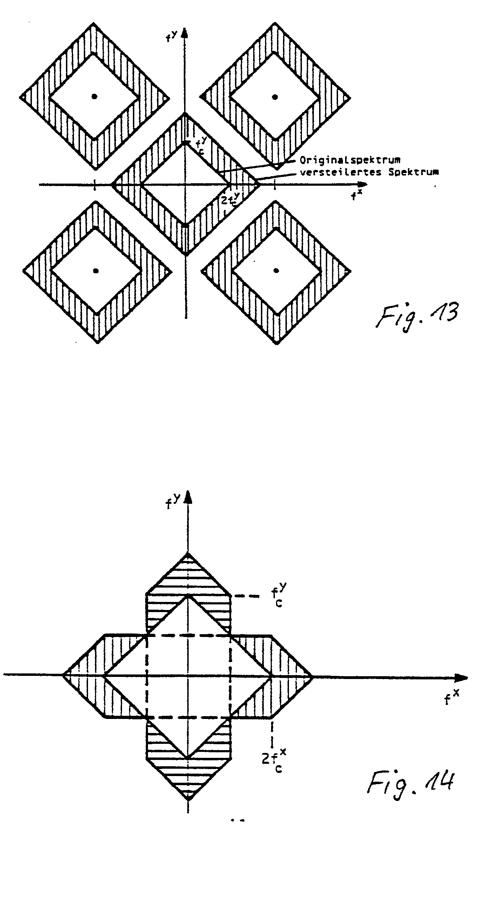

Gegeben sei ein progressiv abtastendes System mit vertikaler Vor- und Nachfilterung und den Auslösungsgrenzen $f_c{}^y$ und $f_c{}^x = 0,5 \ f_c{}^y$ (Fig. 12). Der Bereich innerhalb der Auslösungsgrenzen sei ein aliasfreier Grundbereich des Spektrums $B(f^x, f^y)$. Die Signale lassen sich aliasfrei übertragen mit der vertikalen Abtastfrequenz $f_s{}^y = 2 \ f_c{}^y$ und der horizontalen Abtastfrequenz $f_s{}^x = 2 \ f_c{}^x$.

Im Falle der Bandbegrenzung auf das schmale hochkant stehende Rechteck liegt dabei die horizontale Auflösungsgrenze unabhängig von $f^y$ fest mit $f_c{}^x$. Dies gilt unabhängig davon, ob eine Bildpunktabtastung in "Normallage" oder "Offsetlage" vorliegt.

Im Falle der Offsetabtastung mit der Wiederholung der Spektren in diagonaler Richtung kann die Begrenzung des Basisspektrums auf den Bereich des auf der Spitze stehenden Quadrates erfolgen. Die horizontale Auflösungsgrenze wird dann abhängig von der Vertikalfrequenz $f^y$. Für den praktisch wichtigen Fall niedriger vertikaler Raumfrequenz erhöht sich die horizontale Auflösungsgrenze auf bis zu $2 \ f_c{}^x$. Wie ausgeführt, ist eine solche diagonale Begrenzung des Spektrums besonders günstig im Hinblick auf das visuelle System und auf die Häufigkeit horizontaler und vertikaler Strukturen in natürlichen Bildern.

Auf der Basis dieser diagonalen Vor- und Nachfilterung sind nun ebenfalls sehr vorteilhafte Verfahren zur zweidimensionalen Kantenversteilerung gegeben. Es kann wie in Fig. 13 gezeigt, unmittelbar in beiden diagonalen Richtungen das (lokale Kanten-) Spektrum ausgedehnt werden.

Ähnlich wie bei der vertikalen Vor- und Nachfilterung ist bei diesem Verfahren die Möglichkeit gegeben, eine spektrale Lücke zur Kantenversteilerung zu nutzen. Es gelten dabei ähnliche Grenzen bezüglich des Entstehens von Zeilenflackerstörungen durch Zeilensprungwiedergabe wie bei der vertikalen Filterung. Allerdings wird hier in 2 diagonalen Richtungen versteilert, so daß in vertikaler Richtung, die das Flackern maßgeblich beeinflußt, 2 (projizierte) Filterfunktionen wirksam sind.

Zur Realisierung einer solchen diagonalen Kantenversteilerung sind die Grenzwerte der spektralen Belegung der Lücken bei Zeilensprungwiedergabe und bei Vollbildwiedergabe zu ermitteln. Die Auswirkung der nichtlinearen Kennlinien des visuellen Systems (Weber-Fechner'sches Gesetz) und des Monitors ist dabei zu berücksichtigen.

Eine Verknüpfung der horizontalen bzw. vertikalen Vorfilterung für die Kantenerkennung, wie oben beschrieben, mit der diagonalen Vor- und Nachfilterung ist prinzipiell in Fig. 14 anhand des Signalspektrums dargestellt. Zur Kantendetektion wird in horizontaler und vertikaler Richtung jeweils vorgefiltert (gestrichelte Linien) und dann in der orthogonalen Richtung das lokale Kantenspektrum erweitert (schraffierte Flächen).

Eine solche Technik ermöglicht es, die Vorteile der diagonalen Filterung zu verbinden mit den Vorteilen der horizontalen und vertikalen Kantenversteilerung. Hierdurch ergeben sich Vorteile hinsichtlich
- der Verminderung der Rauschempfindlichkeit durch die vorherige Bandbegrenzung zur Kantendetektion,
- der Verbesserung der "Eckenauflösung" des diagonal gebildeten Spektrums, die stets bei der zweifachen diagonalen Filterung in horizontaler und vertikaler Richtung etwas leidet, da in diesen Richtungen stets 2 diagonale Filterungen mit ihren Projektionen auf die Achsen wirksam sind,
- der Verbesserung der Bildschärfe horizontaler und vertikaler Konturen, was für natürliche Bilder besonders günstig ist.

## Patentansprüche

1. Verfahren zum Übertragen von Fernsehsignalen mit verbesserter Bildqualität, wobei sendeseitig eine zeilenweise Bildabtastung mit doppelter Normzeilenzahl erfolgt, das abgetastete Signal vertikal bzw. planar vorgefiltert wird, eine Abtastwandlung in Normzeilenzahl mit Zeilensprung vorgenommen wird und wobei empfangsseitig eine Abtastrückwandlung und eine entsprechende Nachfilterung durch Interpolation zur Wiedergabe auf einem HDTV-Monitor erfolgt, dadurch gekennzeichnet, daß zur nichtlinearen Kantenversteilerung in die durch die Interpolationsfilterung entstehenden spektralen Lücken im Bildsignal Zusatzsignale hinzugefügt bzw. eingefügt werden, die durch Differenzbildung von Bildabtastwerten an den Kanten aus dem interpolierten Empfangssignal erzeugt werden und/oder aus Signalformparametern, wie Lage der Kanten, Steigung, Amplitude, mittlere Helligkeit

..., synthetisiert werden, indem ein vorkorrigiertes Kantensignal, dessen Verlauf die Parameter des Wiedergabesystems und des visuellen Systems berücksichtigt, mit dem durch das Übertragungssystem vorgegebene maximal steile Kantensignal durch Differenzbildung erzeugt wird.

2. Verfahren nach Anspruch 1, dadurch gekennzeichnet, daß aus dem interpolierten Empfangssignal Kantenlage und Sprunghöhe der Kanten ermittelt werden, und daß aus dem durch die Filterflanke der empfangsseitigen Interpolationsfilterung festgelegten Sprungverlauf durch Addition eines synthetischen Korrektursignals eine synthetische Sprungflanke erzeugt wird, wobei das synthetische Korrektursignal durch eine aus der Sprunghöhe abgeleitete Detailsignalamplitude amplitudenabhängig bewertet wird.

3. Verfahren nach Anspruch 1 oder 2, dadurch gekennzeichnet, daß für das vorkorrigierte Kantensignal die nichtlineare Kennlinie des Monitors, die durch die Monitorspotwirkung zustande kommende zweidimensionale Tiefpaßfilterung, die logarithmische Rezeptorkennlinie des Betrachters und einen zweidimensionalen Tiefpaß des visuellen Systems berücksichtigt wird.

4. Verfahren nach Anspruch 1, dadurch gekennzeichnet, daß die Ausfüllung der durch die empfangsseitige Interpolationsfilterung entstehenden spektralen Lücken zu 80% vorgenommen wird.

5. Verfahren nach Anspruch 1 oder 4, dadurch gekennzeichnet, daß sendeseitig eine Aliasfehler zulassende Kompromißfilterung erfolgt und eine Modulationstiefe von 30–40% an der Grenzfrequenz (vertikale Ortsgrenzfrequenz = halbe Zeilenzahl) zugelassen wird.

6. Verfahren nach Anspruch 1, dadurch gekennzeichnet, daß eine Vorfilterung des sendeseitig abgetasteten Signals in zwei zueinander senkrechten (orthogonalen) Richtungen vorgenommen wird, daß eine Kantenversteilerung in horizontaler Richtung angewendet wird auf das in vertikaler Richtung bandbegrenzte Signal, und eine Kantenversteilerung in vertikaler Richtung angewendet wird auf das in horizontaler Richtung bandbegrenzte Signal.

7. Verfahren nach Anspruch 2, dadurch gekennzeichnet, daß sendeseitig eine an sich bekannte Offsetabtastung, d.h. eine zeilenweise Abtastung, bei der die Abtastpunkte benachbarter Zeilen um einen halben Abtastabstand versetzt sind, sowie eine diagonale Vorfilterung vorgenommen wird, daß eine Vorfilterung zur Kantendetektion nacheinander in horizontaler und vertikaler Bildrichtung vorgenommen wird und daß in den orthogonalen Richtungen das lokale Kantenspektrum zur Kantenversteilerung erweitert wird durch Addition des synthetischen Korrektursignals.

## Revendications

1. Procédé pour transmettre des signaux de télévision à qualité d'image améliorée, dans lequel on effectue côté émission un balayage d'image ligne par ligne avec nombre de lignes doublé par rapport à la norme, le signal exploré est préfiltré verticalement ou en mode planar, une conversion de balayage en nombre de lignes normal avec saut de lignes est effectuée, et, côté réception, on effectue une reconversion de balayage et un postfiltrage correspondant par interpolation pour reproduction sur un moniteur de télévision à haute définition, caractérisé par le fait que, pour l'accroissement non linéaire de la raideur de pente des bords, on ajoute ou insère dans le signal d'image des signaux supplémentaires dans les lacunes spectrales résultant du filtrage d'interpolation, ces signaux supplémentaires étant produits par formation de différence de valeurs d'échantillonage d'image aux endroits de bords, à partir du signal reçu interpolé, et/ou étant synthétisés à partir de paramètres de forme de signal tels que position des bords, inclinaison, amplitude, luminosité moyenne..., un signal de bord précorrigé, dont l'allure tient compte des paramètres du système de reprcduction et du système visuel étant produit par formation de différence avec le signal de bord à raideur de pente maximal prédéterminée par le système de transmission.

2. Procédé selon revendication 1, caractérisé par le fait, qu'à partir du signal de réception interpolé on détermine la position des bords et la hauteur de saut des bords, et par le fait qu'à partir de l'allure du saut fixée par le flanc de filtre du filtrage d'interpolation côté réception, on génère, par addition d'un signal de correction synthétique, un flanc de saut synthétique, le signal de correction synthétique étant évalué en fonction d'une amplitude, par une amplitude de signal de détail dérivée de la hauteur de saut.

3. Procédé selon revendication 1 ou 2, caractérisé par le fait que, pour le signal de bord précorrigé, on prend en compte, la caractéristique non linéaire du moniteur, le filtrage passe-bas bidimensionnel ayant lieu du fait de l'effet de spot du moniteur, la caractéristique logarithmique de réception de l'observateur et un filtre passe-bas bidimensionnel du système visuel.

4. Procédé selon revendication 1, caractérisé par le fait que le remplissage des lacunes spectrales se produisant du fait du filtrage d'interpolation côté réception est réalisé à 80%.

5. Procédé selon revendication 1 ou 4, caractérisé par le fait que, côté émission, on effectue un filtrage de compromis autorisant des défauts par éléments allogènes (alias), et on autorise une profondeur de modulation de 30–40% à la fréquence-limite (fréquence-limite de lieu verticale = demi-nombre de lignes).

6. Procédé selon revendication 1, caractérisé par le fait que l'on effectue, dans deux directions mutuellement perpendiculaires (orthogonales), un préfiltrage du signal exploré côté émission, par le fait que l'on applique, en direction horizontale, au signal à bande limitée en direction verticale un accroissement de raideur de pente des bords, et on applique, en direction verticale, au signal à bande limitée en direction horizontale un accroissement de raideur de pente des bords.

7. Procédé selon revendication 2, caractérisé par le fait que, côté émission, on effectue un balayage offset connu en soi, c'est-à-dire un balayage par lignes dans lequel les points d'exploration de lignes vosines sont décalés d'un demi-intervalle d'exploration, et l'on effectue un préfiltrage diagonal, par le fait qu'un préfiltrage pour la détection des bords est effectué successivement en direction horizontale et verticale de l'image, et par le fait que, dans les directions orthogonales, le spectre de correction synthétique, pour accroissement de la raideur de pente des bords.

**Claims**

1. Method for the transmission of television signals with improved image quality, wherein a linewise image scanning takes place at twice the normal line frequency at the transmission end, the scanned signal is preliminarily filtered vertically or planarly, a scanning conversion into normal line frequency with interlacing is undertaken and wherein a scanning reconversion and a corresponding further filtering by interpolation for reproduction on a high-definition television monitor takes place at the reception end, characterised thereby, that for the non-linear steepening of the edges, additional signals are added to or inserted into the image signal in the spectral gaps arising through the interpolation filtering, which additional signals are generated from the interpolated received signal by difference formation of image scanning values at the edges and/or synthesised from signal shape parameters, such as position of the edges, slope, amplitude and mean brightness, in that a preliminary corrected edge signal, the course of which takes into consideration the parameters of the reproduction system and of the visual system, is generated by difference formation with the maximally steep edge signal preset by the transmission system.

2. Method according to claim 1, characterised thereby, that edge position and step height of the edges are determined from the interpolated received signal and that a synthetic step flank is produced through addition of a synthetic correction signal from the step course fixed by the filter flank of the interpolation filtering at the reception end, wherein the synthetic correction signal is weighted in dependence on amplitude by a detail signal amplitude derived from the step height.

3. Method according to claim 1 or 2, characterised thereby, that the non-linear characteristic of the monitor, the two-dimensional low-pass filtering coming into being due to the monitor spot effect, the logarithmic receptor characteristic of the observer and a two-dimensional low-pass filter of the visual system are taken into consideration for the preliminarily corrected edge signal.

4. Method according to claim 1, characterised thereby, that the filling-out of the spectral gaps arising through the interpolation filtering at the reception end is undertaken to 80%.

5. Method according to claim 1 or 4, characterised thereby, that at the transmission end, a compromise filtering permitting alias errors takes place and a modulation depth of 30 to 40% is permitted at the cut-off frequency (vertical local cut-off frequency = half the line frequency).

6. Method according to claim 1, characterised thereby, that a preliminary filtering of the signal scanned at the transmission end is undertaken in two mutually perpendicular (orthogonal) directions, that a steepening of the edges is applied in horizontal direction to the signal band-limited in vertical direction and a steepening of the edges is applied in vertical direction to the signal band-limited in horizontal direction.

7. Method according to claim 2, characterised thereby, that at the transmission end, a diagonal preliminary filtering as well as an in itself offset scanning (i.e. a linewise scanning, in which the scanning points of neighbouring lines are displaced through half a scanning spacing) are undertaken, that a preliminary filtering for edge detection is undertaken one after the other in horizontal and vertical image direction and that the local edge spectrum is widened in the orthogonal directions for steepening of the edges through addition of the synthetic correction signal.

Fig. 1

Fig. 2

Fig. 3

Fig. 4

Fig. 5

Fig. 6

Fig. 7

Monitor: s(x,y) — Y — 2D-TP

visuelles System: log — 2D-TP — g(x,y)

Fig. 8

Hell

Dunkel

Fig. 9

Senderspektrum vor Abwartskonversion

a) Aliasfreies Vorfilter

b) Vorfilter mit Alias
(höhere Auflösung bei
mittleren Frequenzen)

c) Kamerafrequenzgang

Empfangerspektrum nach Aufwartskonversion
und Kantenversteilerung

d) Aliasfreies Vorfilter

e) Vorfilter mit Alias

Fig. 10

ⓐ Kamera (1250 Zeilen)  ⓓ Monitor (1250 Zeilen)

ⓑ Sender (625 Zeilen)  ⓒ Empfänger (625 Zeilen)

Fig. 11

Fig. 12

Abtastung.

Offsetlage

Normallage

Fig. 13

Fig. 14